# FASCICULE DE BREVET EUROPEEN

(11) **EP 2 468 582 B1**
(45) Date de publication et mention de la délivrance du brevet: **22.05.2013**
(21) Numéro de dépôt: 11194137.3
(22) Date de dépôt: 16.12.2011
(51) Int. Cl.: B60R 22/10, B60R 22/00, B60N 2/26, B60N 2/28

(54) **Harnais amélioré pour équipement de puériculture**
Verbessertes Geschirr für die Kleinkindausrüstung
Improved harness for child care equipment

(30) Priorité: 21.12.2010 FR 1060975
(43) Date de publication de la demande: 27.06.2012
(73) Titulaire: Dorel France SA, 49309 Cholet Cedex (FR)
(72) Inventeur: Biaud, Richard, 49340 TREMENTINES (FR)
(74) Mandataire: Bioret, Ludovic

(56) Documents cités:
- US-A1- 2007 102 989

## Description

Le domaine de l'invention est celui de la puériculture. Plus précisément, l'invention concerne les équipements de puériculture équipés de harnais ou de sangles de sécurité pour maintenir un enfant dans un siège. Ainsi, l'invention s'applique aux sièges autos pour enfant, destinés à être installés sur la banquette ou un siège d'un véhicule automobile, mais également aux poussettes, aux chaises hautes, aux transats,...

Les sièges auto, notamment, sont généralement équipés d'un harnais de sécurité, permettant de retenir l'enfant transporté, en cas de choc. Un tel harnais comprend généralement deux bretelles, ou sangles, destinées à être placées sur les épaules de l'enfant, pour s'étendre le long de son torse, et une patte logée dans l'assise, dite patte d'entrejambe. Pour verrouiller le harnais, deux éléments d'accrochage mâles sont prévus respectivement sur chaque bretelle, et adaptés pour être solidarisés avec des éléments d'accrochage femelles prévus à cet effet dans un élément de verrouillage, monté à l'extrémité de la patte d'entrejambe.

Les éléments d'accrochage mâles sont montés sur une pièce, appelée pêne par la suite, pouvant coulisser le long de la bretelle à laquelle il est associé. Cet élément présente une lumière en forme de fente, dont les dimensions sont adaptées à celle de la sangle : la longueur de la fente est légèrement supérieure à la largeur de la sangle et son épaisseur est un compromis entre l'efficacité du coulissement le long de la sangle (il ne faut pas qu'il y ait de blocage) et le risque que la sangle vrille, et donc fasse un pli, à l'intérieur de la fente.

Ce phénomène de vrillage est dangereux puisqu'il nuit à l'efficacité du harnais : si la pièce coulissante, ou pêne, est bloqué, et si l'utilisateur tente malgré tout de l'accrocher à la patte d'entrejambe, il y a un risque que la sangle ne soit pas tendue convenablement. En outre, sous une forme vrillée, la sangle perd de son efficacité, et peut augmenter le risque de blessure.

Ce phénomène de vrillage est bien connu, et les utilisateurs le rencontrent régulièrement. Il cause en outre des problèmes de manipulation, puisqu'il est alors très difficile de remettre la sangle qui s'est pliée dans sa position normale.

Il est par ailleurs important de garantir un coulissement suffisant et efficace, pour que les bretelles et les pênes soient bien placés lorsque le harnais est fermé, et suffisamment tendu. Ceci suppose la présence d'un jeu suffisant, et donc, à nouveau, un risque de vrillage.

Il est connu (voir US-A-2007/0102989) de prévoir des butées, par exemple sous la forme de boutons fixés sur la sangle, pour définir la zone dans laquelle un élément d'accrochage doit être conservée. Ceci permet d'éviter que cet élément d'accrochage glisse le long de la sangle, vers une zone dans laquelle il ne doit pas être utilisé, et où il peut être difficilement accessible (par exemple sous l'enfant en cours d'installation). Cette approche permet de définir une zone nominale d'utilisation de l'élément d'accrochage, mais ne résout pas les problèmes liés au vrillage dans cette zone nominale.

L'invention a notamment pour objectif de pallier au moins certains de ces inconvénients.

Plus précisément un objectif de l'invention est de fournir un harnais pour dispositif de puériculture supprimant complètement, ou à tout le moins réduisant très fortement, les risques de vrillage d'une sangle dans la fente d'un élément coulissant sur celle-ci.

L'invention a également pour objectif de fournir un tel harnais qui soit peu coûteux et simple à fabriquer et à mettre en ouvre.

Selon au moins un certain mode de réalisation, l'invention a également pour objectif de fournir un tel harnais améliorant la sécurité de l'enfant et/ou l'ergonomie de mise en oeuvre de ce harnais.

Ces objectifs, ainsi que d'autres qui apparaîtront plus clairement par la suite, sont atteints à l'aide d'un harnais pour équipement de puériculture, comprenant au moins une sangle portant un élément d'accrochage monté coulissant le long de ladite sangle, cette dernière circulant dans une lumière prévue à cet effet dans l'élément d'accrochage,

Selon l'invention, ladite sangle présente, sur une portion correspondant à une zone de déplacement nominale dudit élément d'accrochage, une rigidité supérieure à la rigidité du reste de ladite sangle.

Ainsi, le long de la zone de déplacement nominale, c'est-à-dire la zone dans laquelle il est souhaitable que l'élément d'accrochage, ou pêne, puisse être déplacé (cette zone tenant compte des tailles minimum et maximum d'un enfant pouvant être maintenu dans l'équipement, de la position verrouillée et de la position déverrouillée, et le cas échéant d'une position de rangement ou de maintien en position non utilisée), la rigidité est augmentée, pour empêcher tout vrillage. En revanche, en dehors de cette zone, la sangle conserve ses caractéristiques habituelles, et notamment une rigidité moindre.

En d'autres termes, l'invention ne propose pas de définir la zone de déplacement nominal, par des butées à ses extrémités, empêchant le passage de l'élément d'accrochage. Au contraire, la rigidité supérieure ne s'oppose pas au déplacement de cet élément d'accrochage (c'est-à-dire que son épaisseur reste compatible avec la largeur de la lumière de façon à permettre le coulissement) et permet d'empêcher le vrillage (ou à tout le moins réduire fortement les risques de vrillage) sur la longueur de cette zone nominale par l'augmentation de la rigidité.

Selon un mode de réalisation particulier, ladite portion de rigidité supérieure présente une surépaisseur locale.

Cette surépaisseur, présente sur la longueur de la zone de déplacement nominale, permet d'augmenter la rigidité, et de réduire le jeu entre la sangle et la fente de l'élément d'accrochage. Ainsi, on supprime, ou à tout le moins on limite fortement, les risques de vrillage.

Ladite surépaisseur peut notamment être assurée par une bande de matériau adapté rapportée sur ladite sangle. Selon les cas, il peut par exemple s'agir d'une portion de sangle, dans un matériau identique à la sangle elle-même, ou d'une bande de tissu ou d'un matériau plastique.

Dans un mode de réalisation simple et efficace, ladite bande de matériau est cousue et/ou collée sur ladite sangle.

Ladite surépaisseur peut notamment présenter une épaisseur comprise entre l'épaisseur de ladite sangle et le double de celle-ci.

Selon une caractéristique particulière, on peut prévoir qu'au moins une des extrémités de ladite portion de rigidité supérieure présente une butée, empêchant le passage dudit élément d'accrochage.

Ainsi, l'élément d'accrochage est maintenu dans la zone de déplacement nominale, et ne se déplace pas au-delà. On évite ainsi les problèmes des éléments d'accrochage coulissant le long de la sangle, jusqu'à l'assise du siège, et sur lesquels l'enfant est assis lors de son installation.

Une telle butée peut notamment être formée par un repli de ladite bande de matériau. Il est également possible de prévoir une pièce rapportée.

Dans un mode de réalisation particulier, ladite butée est fusible, au-delà d'une force supérieure à un seuil prédéterminé appliquée par ledit élément d'accrochage sur ladite butée.

Ceci permet de repérer simplement et efficacement un siège ayant subi un choc important (au-delà du seuil), et par exemple d'en interdire par sécurité l'usage ou d'obliger à un contrôle.

Dans un mode de réalisation particulier, adapté notamment aux sièges auto, ladite portion de rigidité supérieure s'étend sur une longueur comprise entre 10 et 20 cm.

Par ailleurs, selon un aspect particulier de certains modes de réalisation, ladite portion de rigidité supérieure présente une sous-portion de maintien, par frottement, dudit élément d'accrochage.

Ainsi, lorsque l'élément d'accrochage n'est pas utilisé, c'est-à-dire en l'absence d'enfant, ce dernier peut être maintenu dans une position choisie, aisément accessible par l'utilisateur (au lieu de coulisser le long de la sangle).

Le frottement peut être remplacé par exemple par une aimantation, assurant également le maintien de l'élément d'accrochage.

Ladite sous-portion de blocage peut notamment être formée par l'insertion d'un élément souple (un bloc de mousse par exemple) entre ladite sangle et une bande de matériau formant la surépaisseur.

Selon d'autres modes de réalisation, ladite portion de rigidité supérieure peut comprendre, ou être obtenue, à l'aide de :
- un élément de rigidification, par exemple en matière plastique ou en métal ;
- un revêtement de rigidification ;
- un traitement chimique, par un exemple par trempage dans un produit de rigidification ou dépôt d'un tel produit.

Par ailleurs, ladite portion de rigidité supérieure peut, dans certains modes de réalisation, porter et/ou coopérer avec des éléments de sécurité gonflables et/ou avec des moyens de déclenchement de tels éléments de sécurité gonflables.

Dans un mode de réalisation particulier, le harnais de l'invention, comprend deux bretelles, formées chacune par une sangle portant ladite portion de rigidité supérieure.

Il peut notamment s'agir d'un harnais destiner à équiper un siège auto, une poussette, une nacelle, un transat pour enfant ou une chaise haute.

D'autres caractéristiques et avantages de l'invention apparaîtront plus clairement à la lecture de la description suivante d'un mode de réalisation préférentiel de l'invention, donné à titre d'exemple illustratif et non-limitatif et des dessins annexés, parmi lesquels :
- la figure 1 présente, schématiquement et en coupe, une portion d'une sangle de harnais selon l'art antérieur, équipée d'un pêne pouvant être déplacé le long de la sangle ;
- la figure 2 présente, également en coupe, un mode de réalisation d'une sangle améliorée, selon l'invention ;
- la figure 3 illustre, en coupe, un mode de réalisation particulier d'une sangle selon l'invention ;
- la figure 4 est une vue en perspective de la figure 3.

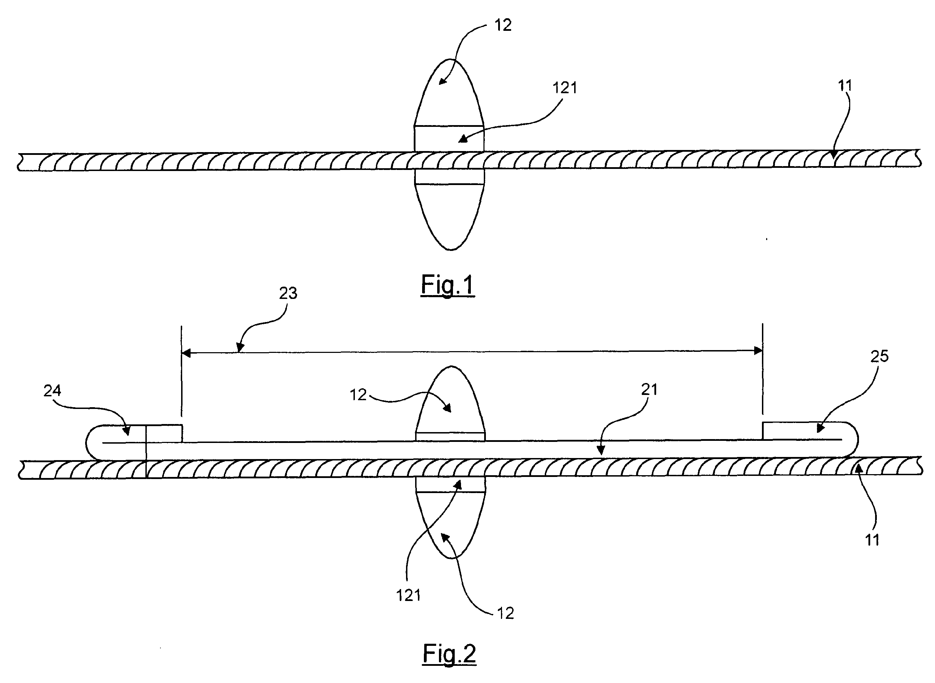

Comme expliqué précédemment, l'inconvénient des harnais de type connu est le risque de vrillage (« twist » en anglais), pouvant conduire à un blocage du pêne le long de la sangle de harnais. Cet aspect est illustré par la figure 1, qui présente en coupe une portion de sangle de harnais 11, le long de laquelle peut coulisser un pêne 12.

Ce pêne 12 présente une lumière 121, dans laquelle passe la sangle 11. La largeur, ou hauteur, de cette lumière 121 est, par exemple, de l'ordre de 2 millimètres, alors que l'épaisseur de la sangle 11 peut être de l'ordre de 0,9 ± 0,1 millimètre.

La dimension de la lumière 121 est choisie pour optimiser les qualités de coulissement, tout en tentant de limiter, voire supprimer, les risques de vrillage, c'est-à-dire les cas où la sangle se plie et se retourne sur elle-même, ce pli bloquant, ou à tout le moins gênant, fortement le déplacement du pêne 12, et étant, en outre, très difficile à supprimer.

Pour résoudre encore plus efficacement ce problème, l'invention propose, comme illustré sur la vue en coupe de la figure 2, de prévoir une portion de rigidité supérieure, par rapport à la rigidité de reste de la sangle. En d'autres termes, la sangle présente d'une part, deux portions d'extrémité, une rigidité standard, ou habituelle, et d'autre part, sur une portion dans laquelle le pêne doit en principe se trouver (zone de déplacement nominale du pêne) une rigidité supérieure, qui permet de supprimer, ou à tout le moins de fortement réduire, les risques de vrillage. On constate en effet qu'il n'est pas nécessaire que ce pêne soit mobile sur toute la longueur de la sangle, mais uniquement dans une plage prédéterminée, appelée ici zone de déplacement nominale. Seule cette zone présente une rigidité supérieure, selon l'invention, le reste de la sangle conservant sa souplesse habituelle, permettant des manipulations aisées, et assurant le conforte et la sécurité de l'enfant.

Cette rigidité supérieure peut notamment être obtenue par l'insertion ou le report d'un élément de rigidification, par exemple en matière plastique ou en métal. On peut également appliquer à cette portion de la sangle un traitement chimique, par trempage dans un matériau assurant la rigidification, ou par application d'un tel matériau sur la surface de la sangle.

Selon le mode de réalisation décrit plus en détail par la suite, la rigidité supérieure est assurée à l'aide d'un élément formant surépaisseur (appelé par la suite « une surépaisseur ») local 21, rapporté sur une portion de la sangle 11. Cette surépaisseur 21 peut se présenter notamment sous la forme d'une pièce souple, en un tissu ou un matériau adapté. Par exemple, il peut s'agir d'une portion de sangle, de même nature que la sangle 11, ou d'un matériau sensiblement plus épais, et, le cas échéant, présentant une certaine souplesse.

Cette surépaisseur est choisie de façon que l'épaisseur globale formée par la superposition de la sangle 11 et de la surépaisseur 21 soit par exemple de l'ordre de 2,2 millimètres. Ainsi, on limite, sur une portion de la sangle 23, le jeu dans la lumière 121. De ce fait, le risque de vrillage est fortement limité, voire supprimé.

La surépaisseur 21 peut être solidarisée à la sangle 11 par tout moyen adéquat, tels que le collage, le soudage ou la couture.

Selon les cas, elle peut être réalisée dans un matériau de couleur différente de celui de la sangle 11, pour matérialiser la zone présentant cette surépaisseur. Cette zone est également la zone 23 dans laquelle un déplacement du pêne 12 est souhaitable, en fonction de l'application, dite zone de déplacement nominale.

Ainsi, par exemple, pour un siège auto équipé d'un harnais et pouvant être utilisé en Groupe 0 et en Groupe 1, les bretelles du harnais pourront porter une telle surépaisseur sur une distance de l'ordre de 10 à 20 cm, typiquement 12 cm. Il n'est pas nécessaire que le pêne 12 puisse se déplacer au-delà de cette zone 23. Au contraire, il est souhaitable que le pêne reste en permanence dans cette zone, et ne coulisse pas jusqu'en partie inférieure de la sangle, ou elle est généralement peu aisée à saisir, en particulier, lorsqu'un enfant est installé dans le siège, et, par exemple, assis sur ce pêne.

Dans cet objectif, il est possible de former des butées 24 et 25, aux deux extrémités de la zone 23, de façon que le pêne 12 ne puisse pas aller au-delà de cette zone. Ces butées peuvent être formées à l'aide d'une pièce rapportée, ou, de façon simple, comme illustrée sur la figure 2, par un repli de la surépaisseur 21, par exemple, cousu avec la sangle 11. On peut ainsi obtenir une épaisseur globale de l'ordre de 3 millimètres, supérieure à la largeur de la lumière 121. Ainsi, le pêne 12 est maintenu dans la zone 23.

Selon un aspect particulier de certains modes de réalisation de l'invention, ces butées peuvent être formées de façon à céder, ou se déformer, en cas de choc violent. Ainsi, il est possible d'identifier un siège ayant subi un tel choc violent, supérieur à un seuil prédéterminé, puisque le pêne pourra alors se déplacer au-delà de la zone 23. Un tel siège ayant subi une contrainte forte peut ne plus répondre aux exigences de sécurité, et ne doit plus être utilisé. Le fait que la butée a cédé est un indicateur de ce risque.

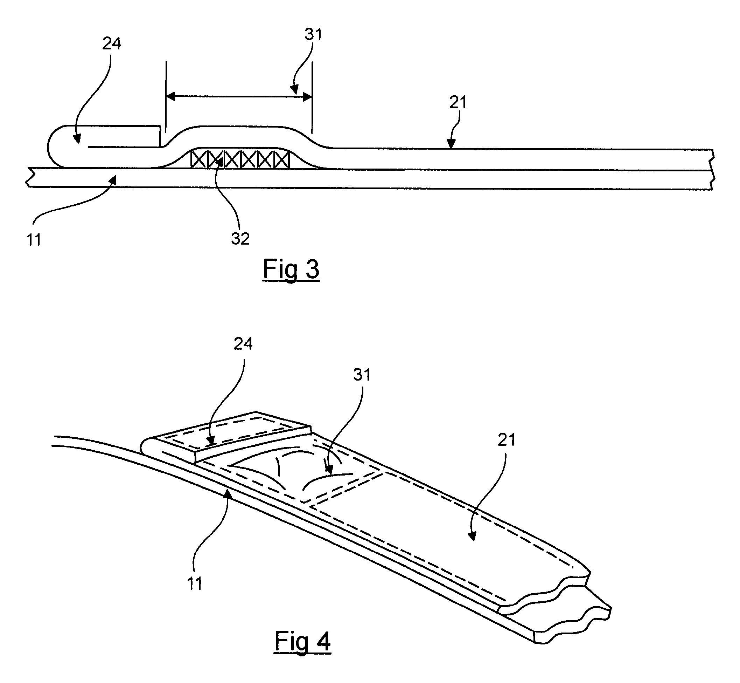

Selon une autre variante de l'invention, on peut prévoir une zone d'immobilisation 31 du pêne, comme illustrée sur les figures 3 et 4. Il peut en effet être souhaitable que le pêne 12, lorsqu'il n'est pas verrouillé, soit placé dans une zone particulière, où il est aisément accessible (typiquement en partie supérieure de la zone 23, pour une bretelle de harnais). Pour cela, on prévoit une zone d'immobilisation 31, par exemple, sur une longueur de l'ordre de 2 cm, présentant un bossage souple, qui peut être obtenu en insérant un élément en mousse 32 entre la sangle 11 et la surépaisseur 21.

Lorsque le pêne 12 est placé dans cette zone, la mousse se comprime légèrement, et la lumière 121 est intégralement remplie, au moins en épaisseur, ce qui assure son blocage, en l'absence de toute autre action. On obtient donc un blocage par frottement.

Bien sûr, la souplesse de la mousse 32 est choisie de façon que, dès qu'un utilisateur saisit le pêne 12 et la déplace, celui-ci se dégage aisément et coulisse de façon efficace. Le bossage peut être remplacé par une zone présentant un frottement plus important, ou portant un aimant, apte à coopérer avec une partie métallique du pêne.

Selon encore un autre aspect de certains modes de réalisation, la portion de rigidité supérieure peut loger (au moins en partie) un élément de sécurité gonflable. Un tel élément gonflable est ainsi placé de façon efficace, pour protéger l'enfant en cas de choc ou d'accident. On peut notamment prévoir un élément gonflable dans chaque bretelle, et le cas échéant les relier entre eux, comme décrit dans la demande de brevet non publiée FR 10 60856.

Les moyens de déclenchement du gonflage de ces éléments de sécurité peuvent être également, en tout ou en partie, associés à la portion de rigidité supérieure, et par exemple aux butées formant fusible. Des moyens de contrôle de la présence d'un enfant peuvent aussi être prévus, et par exemple associés aux pênes (en tenant compte de son verrouillage, ou de sa position : si le pêne est dans la zone d'immobilisation, il n'y a pas d'enfant maintenu par le harnais, et il ne faut donc pas déclencher le gonflage, même en cas de choc).

L'invention peut notamment être mise en oeuvre sur les bretelles de harnais de siège auto, comme décrit ci-dessus, mais également sur de nombreux dispositifs de puériculture équipés de sangles de maintien d'un enfant, tels que les poussettes, les nacelles, les chaises hautes, les transats, ...

## Revendications

1. Harnais pour équipement de puériculture, comprenant au moins une sangle (11) portant un élément d'accrochage (12) monté coulissant le long de ladite sangle (11), cette dernière circulant dans une lumière (121) prévue à cet effet dans l'élément d'accrochage (12),
**caractérisé en ce que** ladite sangle (11) présente, sur une portion (23) correspondant à une zone de déplacement nominale dudit élément d'accrochage (12), une rigidité supérieure à la rigidité du reste de ladite sangle (11).

2. Harnais selon la revendication 1, **caractérisé en ce que** ladite portion de rigidité supérieure (23) présente une surépaisseur locale (21).

3. Harnais selon la revendication 2, **caractérisé en ce que** ladite surépaisseur (21) est assurée par une bande de matériau adapté rapportée sur ladite sangle (11).

4. Harnais selon la revendication 3, **caractérisé en ce que** ladite bande de matériau est cousue et/ou collée sur ladite sangle (11).

5. Harnais selon l'une quelconque des revendications 2 à 4, **caractérisé en ce que** ladite surépaisseur (21) présente une épaisseur comprise entre l'épaisseur de ladite sangle (11) et le double de celle-ci.

6. Harnais selon l'une quelconque des revendications 1 à 5, **caractérisé en ce qu'**au moins une des extrémités de ladite portion de rigidité supérieure (23) présente une butée (24, 25), empêchant le passage dudit élément d'accrochage.

7. Harnais selon les revendications 3 et 6, **caractérisé en ce que** ladite butée (24, 25) est formée par un repli de ladite bande de matériau.

8. Harnais selon l'une quelconque des revendications 6 et 7, **caractérisé en ce que** ladite butée est fusible, au-delà d'une force supérieure à un seuil prédéterminé appliquée par ledit élément d'accrochage (12) sur ladite butée (24, 25).

9. Harnais selon l'une quelconque des revendications 1 à 7, **caractérisé en ce que** ladite portion de rigidité supérieure s'étend sur une longueur comprise entre 10 et 20 cm.

10. Harnais selon l'une quelconque des revendications 1 à 9, **caractérisé en ce que** ladite portion (23) de rigidité supérieure présente une sous-portion de maintien (31), par frottement, dudit élément d'accrochage (12).

11. Harnais selon les revendications 2 et 10, **caractérisé en ce que** ladite sous-portion (31) de blocage est formée par l'insertion d'un élément souple (32) entre ladite sangle (11) et une bande de matériau formant la surépaisseur.

12. Harnais selon l'une quelconque des revendications 1 à 11, **caractérisé en ce que** ladite portion de rigidité supérieure (23) comprend ou est obtenue à l'aide de :
- un élément de rigidification, par exemple en matière plastique ou en métal ;
- un revêtement de rigidification ;
- un traitement chimique, par un exemple par trempage dans un produit de rigidification ou dépôt d'un tel produit.

13. Harnais selon l'une quelconque des revendications 1 à 12, **caractérisé en ce que** ladite portion de rigidité supérieure (23) porte et/ou coopère avec des éléments de sécurité gonflables et/ou avec des moyens de déclenchement de tels éléments de sécurité gonflables.

14. Harnais selon l'une quelconque des revendications 1 à 13, **caractérisé en ce qu'**il comprend deux bretelles, formées chacune par une sangle portant ladite portion de rigidité supérieure (23).

15. Harnais selon l'une quelconque des revendications 1 à 14, **caractérisé en ce qu'**il équipe un siège auto, une poussette, une nacelle, un transat pour enfant ou une chaise haute.

## Patentansprüche

1. Gurtzeug für Kleinkinderpflegeausrüstungen, das mindestens einen Gurt (11) aufweist, welcher ein Element zum Einhaken (12) trägt, das so angebracht ist, dass es entlang des Gurtes (11) gleiten kann, wobei der Gurt durch einen zu diesem Zweck im Element zum Einhaken (12) angebrachten Schlitz (121) läuft,
**dadurch gekennzeichnet, dass** der Gurt (11) über einen Teil (23), der über einen Bereich, welcher der nominalen Bewegung des Elementes zum Einhaken (12) entspricht, eine Steifigkeit aufweist, die höher ist, als die Steifigkeit des Restes des Gurtes (11).

2. Gurtzeug nach Anspruch 1, **dadurch gekennzeichnet, dass** der Teil höherer Steifigkeit (23) eine örtliche erhöhte Stärke (21) aufweist.

3. Gurtzeug nach Anspruch 2, **dadurch gekennzeichnet, dass** die örtlich erhöhte Stärke (21) durch ein Band eines geeigneten Materials sichergestellt wird, das auf dem Gurt (11) aufgetragen ist.

4. Gurtzeug nach Anspruch 3, **dadurch gekennzeichnet, dass** das besagte Materialband auf den Gurt (11) genäht oder geklebt ist.

5. Gurtzeug nach einem der Ansprüche 2 bis 4, **dadurch gekennzeichnet, dass** die erhöhte Stärke (21) zwischen der Stärke des Gurtes (11) und dem doppelten Wert dieser Stärke liegt.

6. Gurtzeug nach einem der Ansprüche 1 bis 5, **dadurch gekennzeichnet, dass** mindestens ein Ende des besagten Teils höherer Steifigkeit (23) einen Anschlag (24, 25) aufweist, der das Durchlaufen des besagten Elementes zum Einhaken verhindert.

7. Gurtzeug nach den Ansprüchen 3 und 6, **dadurch gekennzeichnet, dass** der Anschlag (24, 25) durch ein umgefaltetes Stück des Materialbandes gebildet wird.

8. Gurtzeug nach Anspruch 6 oder 7, **dadurch gekennzeichnet, dass** der besagte Anschlag schmelzbar ist, wenn die Kraft, die vom Element zum Einhaken (12) auf den Anschlag (24, 25) ausgeübt wird, höher als ein vorgegebener Schwellenwert ist.

9. Gurtzeug nach einem der Ansprüche 1 bis 7, **dadurch gekennzeichnet, dass** der besagte Anteil erhöhter Steifigkeit sich über eine Länge von 10 bis 20 cm erstreckt.

10. Gurtzeug nach einem der Ansprüche 1 bis 9, **dadurch gekennzeichnet, dass** der Teil (23) erhöhter Steifigkeit einen Unterteil (31) aufweist, der das Element zum Einhaken (12) durch Reibung hält.

11. Gurtzeug nach den Ansprüchen 2 und 10, **dadurch gekennzeichnet, dass** das Unterteil zum Blockieren (31) durch Einfügen eines biegsamen Elementes (32) zwischen dem Gurt (11) und einem die erhöhte Stärke bildendes Materialband gebildet wird.

12. Gurtzeug nach einem der Ansprüche 1 bis 11, **dadurch gekennzeichnet, dass** der Teil erhöhter Steifigkeit (23) folgendes umfasst, oder mit Hilfe der folgenden Elemente gebildet wird:
- ein Versteifungselement, beispielsweise aus Kunststoff oder Metall;
- einen versteifenden Überzug;
- eine chemische Behandlung, die beispielsweise durch Eintauchen in ein versteifendes Produkt oder durch Ablagerung eines derartigen Produktes erfolgt.

13. Gurtzeug nach einem der Ansprüche 1 bis 12, **dadurch gekennzeichnet, dass** der besagte Teil erhöhter Steifigkeit (23) aufblasbare Sicherheitselemente trägt und/oder mit ihnen zusammenwirkt, und/oder mit Mitteln zusammenwirkt, die das Auslösen derartiger aufblasbarer Sicherheitselemente bewirken.

14. Gurtzeug nach einem der Ansprüche 1 bis 13, **dadurch gekennzeichnet, dass** es zwei Schulterbänder aufweist, die jeweils durch einen Gurt gebildet werden, der den erwähnten Teil erhöhter Steifigkeit (23) trägt.

15. Gurtzeug nach einem der Ansprüche 1 bis 14, **dadurch gekennzeichnet, dass** es auf einem Autositz, in einem Kinderwagen, in einer Babywanne, auf einem Liegestuhl für Kinder oder einem erhöhten Kinderstuhl angebracht ist.

## Claims

1. Harness for child-care equipment, comprising at least one strap (11) carrying a coupling element (12) which is mounted so as to slide along the said strap (11), the latter passing through an aperture (121) provided for that purpose in the coupling element (12), **characterised in that** the said strap (11) has, over a portion (23) that corresponds to a nominal zone of displacement of the said coupling element (12), a rigidity which is greater than the rigidity of the rest of the said strap (11).

2. Harness according to claim 1, **characterised in that** the said portion (23) of greater rigidity has a local extra-thick portion (21).

3. Harness according to claim 2, **characterised in that** the said extra-thick portion (21) is brought about by a strip of appropriate material added onto the said strap (11).

4. Harness according to claim 3, **characterised in that** the said strip of material is stitched and/or bonded onto the said strap (11).

5. Harness according to any of claims 2 to 4, **characterised in that** the said extra-thick portion (21) has a thickness which lies between the thickness of the said strap (11) and twice that thickness.

6. Harness according to any of claims 1 to 5, **characterised in that** at least one of the ends of the said portion (23) of greater rigidity has a stop (24, 25) which prevents the said coupling element from moving past it.

7. Harness according to claims 3 and 6, **characterised in that** the said stop (24, 25) is formed by a folded-over portion of the said strip of material.

8. Harness according to either of claims 6 or 7, **characterised in that** the said stop is fusible when under a force which is greater than a predetermined threshold and which is applied by the said coupling element (12) to the said stop (24, 25).

9. Harness according to any of claims 1 to 7, **characterised in that** the said portion of greater rigidity extends over a length of between 10 and 20 cm.

10. Harness according to any of claims 1 to 9, **characterised in that** the said portion (23) of greater rigidity has a sub-portion (31) for holding the said coupling element (12) in position by friction.

11. Harness according to claims 2 and 10, **characterised in that** the said jamming sub-portion (31) is formed by the insertion of a flexible element (32) between the said strap (11) and a strip of material forming the extra-thick portion.

12. Harness according to any of claims 1 to 11, **characterised in that** the said portion (23) of greater rigidity comprises, or is obtained with the aid of:
- a stiffening element made, for example, of plastic material or of metal;
- a stiffening covering;
- a chemical treatment, for example by immersion in a stiffening product or the deposition of such a product.

13. Harness according to any of claims 1 to 12, **characterised in that** the said portion (23) of greater rigidity carries, and/or cooperates with, inflatable safety elements and/or with means for triggering such inflatable safety elements.

14. Harness according to any of claims 1 to 13, **characterised in that** it comprises two shoulder straps which are each formed by a strap carrying the said portion (23) of greater rigidity.

15. Harness according to any of claims 1 to 14, **characterised in that** it fits out a car seat, a pushchair, a carrycot, a baby-bouncer or a high chair.
